# EUROPEAN PATENT SPECIFICATION

(11) **EP 4 108 150 B1**
(45) Date of publication and mention of the grant of the patent: **16.10.2024**
(21) Application number: 21180785.4
(22) Date of filing: 22.06.2021
(51) Int. Cl.: A47L 15/00

(54) **A METHOD OF TREATING DISHWARE IN A DOMESTIC AUTOMATIC DISHWASHING MACHINE**
VERFAHREN ZUR BEHANDLUNG VON GESCHIRR IN EINER HAUSHALTSGESCHIRRSPÜLMASCHINE
PROCÉDÉ DE TRAITEMENT DE LA VAISSELLE DANS UN LAVE-VAISSELLE DOMESTIQUE AUTOMATIQUE

(43) Date of publication of application: 28.12.2022
(73) Proprietor: The Procter & Gamble Company, Cincinnati, OH 45202 (US)
(72) Inventor: INGENBLEEK, Aude, 1853 Strombeek-Bever (BE); IRAIN, Noor, 1853 Strombeek-Bever (BE); MINOT, Pauline, 1853 Strombeek-Bever (BE)
(74) Representative: P&G Patent Belgium UK

(56) References cited:
- EP-B1- 2 756 789
- EP-B1- 3 288 436
- US-A1- 2019 233 766

## Description

### FIELD OF THE INVENTION

The present invention relates to a washing cycle for a domestic automatic dishwashing machine. The washing cycle of the present invention is highly efficient, environmentally friendly, uses low energy, short in duration, and provides good cleaning performance. In addition, the washing cycle of the present invention also provides benefits on shine performance and spotting performance. The washing cycle of the present invention is also suitable for normal and heavily soiled dishware as well as lightly soiled dishware.

### BACKGROUND OF THE INVENTION

There is trend in the automatic domestic dishwashing industry to meet the consumer demand for faster and more efficient washing cycles for domestic use. However, simply reducing the time and temperature of the main wash step oftentimes has a negative impact on the cleaning performance, as well as the shine profile and spotting profile. Whilst simply replacing the main washing cycle of the automatic domestic dishwasher with a care cycle also does not deliver the required level of cleaning performance. Care cycles are typically designed for glass and/or can only handle very lightly soiled dish. These care cycles are not suitable for use as the main washing cycle of an automatic washing machine.

One method of overcoming problems with reducing the time of the washing step is to increase the wash temperature. However, this is not a very efficient or an environmentally friendly approach and can also reduce the care profile of the washing cycle as higher temperatures can be more aggressive to the dishware being cleaned.

The present invention provides a washing cycle for an automatic domestic dishwashing machine that is highly efficient, is environmentally friendly, uses low energy, is short, and provides good cleaning performance. In addition, the washing cycle of the present invention also provides benefits on shine performance and spotting performance. The washing cycle of the present invention is also suitable for normal and heavily soiled dishware as well as lightly soiled dishware. This is achieved by very careful control of the water loading and temperature profile (heat and duration) of both the washing step and rinse step of the cleaning cycle, which in turn provides a highly efficient cleaning cycle that provides the above mentioned benefits. US 2019/233766 A1, EP 3 288 436 B1 and EP 2 756 789 B1 relate to a method of treating dishware.

### SUMMARY OF THE INVENTION

The present invention provides to a method of treating dishware in a domestic automatic dishwashing machine according to claim 1. Preferred embodiments of the invention are defined by the dependent claims.

### DETAILED DESCRIPTION OF THE INVENTION

### A Method of Treating Dishware In A Domestic Automatic Dishwashing Machine

The method of treating dishware in a domestic automatic dishwashing machine has a total duration of from 30 minutes to 50mins.

The method comprises a wash step and a rinse step. The wash step and rinse step are described in more detail below.

Preferably, the method does not comprise a pre-wash step.

Preferably, the water dosed into the cleaning chamber at the start of the wash step and/or the additional water dosed into the cleaning chamber at the start of the rinse step is at ambient temperature.

Preferably, at the start of the wash cycle from 3.0 litres to 4.0 litres of water is dosed into the cleaning chamber, and/or at the start of the rinse cycle from 3.5 litres to 4.0 litres of additional water is dosed into the cleaning chamber.

Preferably, the method has a total energy consumption of less than 0.9kWh, or less than 0.8kWh, or less than 0.7kWh. The method of measuring total energy consumption is described in more detail below.

Preferably, the wash step has an energy consumption of less than 0.4kWh, and the rinse step has an energy consumption of less than 0.5kWh. The methods of measuring the energy consumption of the wash step and rinse step are described in more detail below.

### Wash Step

At the start of the wash step from 2.0 litres to 5.0 litres of water is dosed into the cleaning chamber of the dishwashing machine. The water contacts the dishware in the cleaning chamber of the dishwashing machine.

Preferably, at the start of the wash cycle from 3.0 litres to 4.0 litres of water is dosed into the cleaning chamber.

The water may be dosed into the cleaning chamber in one continuous addition of water.

The wash step has a duration of from 15mins to 30mins.

The wash step begins when the water starts to be dosed into the cleaning chamber. Typically, water starts to be dosed into the cleaning chamber by opening a valve that allows the water to enter the cleaning chamber.

During the wash step, a detergent composition is dosed into the cleaning chamber and contacts the water to form wash water. The wash water contacts the dishware in the cleaning chamber.

It may be preferred that during the wash step the detergent composition is dosed into the cleaning chamber at a point in time that is between two (2) and five (5) minutes after the start of the wash step.

Typically, during the wash step, water is dosed into the cleaning chamber in a continuous manner. It might be preferred that as soon as possible (within two (2) or five (5) minutes) after the dosing of water into the cleaning chamber has finished, the detergent composition is then dosed into the cleaning chamber.

The wash step ends when the wash water starts to be removed from the cleaning chamber. Typically, wash water starts to be removed from the cleaning chamber by opening a valve that allows the wash water to be removed from the cleaning chamber.

At least most of the wash water is removed from the cleaning chamber at the end of the wash step. Typically, there is some level of wash water that remains after the wash step and is carried over into the rinse step. This is typical with conventional domestic automatic dishwashing machines. However, this is minimized as much as possible. It could be that up to 0.5 litres, or up to 0.4 litres, or up to 0.3 litres of wash water remains in the cleaning chamber at the end of the wash step.

The wash step has a temperature profile such that at least 10mins of the wash step is carried out a temperature in the range of from 40°C to less than 50°C.

Preferably, the wash step has a temperature profile such that at least 10mins of the wash step is carried out a temperature in the range of from 40°C to 48°C.

Preferably, the water dosed into the cleaning chamber at the start of the wash step is at ambient temperature.

Preferably, the wash step has an energy consumption of less than 0.4kWh.

### Rinse Step

At the start of the rinse step from 2.0 litres to 5.0 litres of additional water is dosed into the cleaning chamber to form rinse water. The rinse water contacts the dishware in the cleaning chamber.

Preferably, at the start of the rinse cycle from 3.5 litres to 4.0 litres of additional water is dosed into the cleaning chamber.

The rinse step has a duration of from 15mins to 30mins.

The rinse step begins when the additional water starts to be dosed into the cleaning chamber. Typically, additional water starts to be dosed into the cleaning chamber by opening a valve that allows the additional water to enter the cleaning chamber.

Preferably, during the rinse step a rinse aid composition is dosed into the cleaning chamber and contacts the rinse water to form a rinse solution, and wherein the rinse solution contacts dishware in the dishwashing machine.

The rinse step ends when the rinse water starts to be removed from the cleaning chamber. Typically, rinse water starts to be removed from the cleaning chamber by opening a valve that allows the rinse water to be removed from the cleaning chamber.

At least most of the rinse water is removed from the cleaning chamber at the end of the rinse cycle.

The rinse step has a temperature profile such that at least 7mins of the rinse cycle is carried out a temperature in the range of from 55°C to 65°C.

Preferably, the rinse step has a temperature profile such that at least 7mins of the rinse cycle is carried out a temperature in the range of from 57°C to 63°C.

The method may comprise additional step steps. The method may comprise at least two, or at least three or even at least four rinse steps. However, preferably the method comprises only one single rinse step and does not comprise any additional rinse steps.

Preferably, the additional water dosed into the cleaning chamber at the start of the rinse step is at ambient temperature.

Preferably, the rinse step has an energy consumption of less than 0.5kWh.

The rinse step can include a drying phase. In this manner, the rinse water is typically stopped from circulating within the cleaning chamber. The dishware is then typically left to dry in the cleaning chamber, benefitting from the heat that was delivered to the cleaning chamber during the early part of the rinse step. At the end of the drying phase, the rinse water is then typically removed from the cleaning chamber.

Alternatively, the rinse step does not comprise a drying step. In this manner, the rinse water is removed from the cleaning chamber as soon as possible after the circulation of the rinse water within the cleaning chamber has ended.

### Domestic Automatic Dishwashing Machine

Typical domestic dishwashing machines have a 12, or 13, or 14, or 15 or even 16 plate settings. They range in size typically from dimensions of 45cm width & depth, 85cm height (for slimline domestic automatic dishwashing machines) to 60cm width & depth, 85cm height (for full size domestic dishwashing machines). Very small counter-top domestic automatic dishwashing machines are not preferred for the present invention.

The volume of the cleaning chamber is typically in the range of from 100 litres to 200 litres.

Suitable dishwashing machines are determined by the international standard: IEC 60436:2015. This standard defines two (2) load types, a 'European' and 'US'. Suitable dishwashing machines can also be determined by the European standards EN 50242:2016 and EN 60436:2016. Suitable dishwashing machines can also be defined by the US standard AHAM DW-1-2019.

### Detergent Composition

The detergent composition (also referred to herein as the automatic dishwashing cleaning composition) can be in any physical form. It can be a loose powder, a gel or presented in unit dose form. Preferably it is in unit dose form, unit dose forms include pressed tablets and water-soluble packs. The automatic dishwashing cleaning composition of the invention is preferably presented in unit-dose form and it can be in any physical form including solid, liquid and gel form. The composition of the invention is very well suited to be presented in the form of a multi-compartment pack, more in particular a multi-compartment pack comprising compartments with compositions in different physical forms, for example a compartment comprising a composition in solid form and another compartment comprising a composition in liquid form. The composition is preferably enveloped by a water-soluble film such as polyvinyl alcohol. Especially preferred are compositions in unit dose form wrapped in a polyvinyl alcohol film having a thickness of less than 100 µm. The detergent composition of the invention weighs from about 8 to about 25 grams, preferably from about 10 to about 20 grams. This weight range fits comfortably in a dishwasher dispenser. Even though this range amounts to a low amount of detergent, the detergent has been formulated in a way that provides all the benefits mentioned herein above. Alternatively, the composition can be provided in a pack comprising a plurality of doses and the cleaning composition can be autodosed into the dishwasher.

The composition is preferably phosphate free. By "phosphate-free" is herein understood that the composition comprises less than 1%, preferably less than 0.1% by weight of the composition of phosphate.

### Terpolymer

The detergent composition may comprise a terpolymer. Suitable terpolymers comprise monomers of a vinyl lactam, monomers of (meth)acrylic acid and monomers of a linear or branched C1-C20 alkyl (meth)acrylate. Preferably, the terpolymer comprises monomers of vinylpyrrolidone, monomers of acrylic acid and monomers of a linear or branched C1-C20 alkyl (meth)acrylate. Preferably, the terpolymer comprises: i) from about 20% to about 90%, preferably from about 40 to about 70% by weight of vinylpyrrolidone, ii) from about 1 to about 55%, preferably from about 15 to 40% by weight of (meth)acrylic acid; and iii) from about 1 to about 25%, preferably from about 5 to about 20% by weight of a linear or branched C1-C20 alkyl (meth)acrylate. Preferably, the terpolymer has a weight average molecular weight of from about 10000 gmol-1 to about 2000000 gmol-1 as measured via appropriate techniques. A preferred linear or branched C1-C20 alkyl (meth)acrylate is lauryl methacrylate. Terpolymers suitable for use herein include Styleze 2000 and Acrylidone LM, both provided by Ashland. Preferably, the composition of the invention comprises from about 0.1% to about 10%, preferably from about 0.2% to about 5% by weight of the composition of terpolymer.

### Non-ionic surfactant

Surfactants suitable for use herein include non-ionic surfactants, preferably the compositions are free of any other surfactants. Traditionally, non-ionic surfactants have been used in automatic dishwashing for surface modification purposes in particular for sheeting to avoid filming and spotting and to improve shine. It has been found that non-ionic surfactants can also contribute to prevent redeposition of soils.

The composition comprises a non-ionic surfactant, preferably a non-ionic surfactant system. The non-ionic surfactant or a non-ionic surfactant system has a phase inversion temperature, as measured at a concentration of 1% in distilled water, between 20 and 70°C, preferably between 35 and 65°C. By a "non-ionic surfactant system" is meant herein a mixture of two or more non-ionic surfactants. Preferred for use herein are non-ionic surfactant systems. They seem to have improved cleaning and finishing properties and better stability in product than single non-ionic surfactants.

Phase inversion temperature is the temperature below which a surfactant, or a mixture thereof, partitions preferentially into the water phase as oil-swollen micelles and above which it partitions preferentially into the oil phase as water swollen inverted micelles. Phase inversion temperature can be determined visually by identifying at which temperature cloudiness occurs.

The phase inversion temperature of a non-ionic surfactant or system can be determined as follows: a solution containing 1% of the corresponding surfactant or mixture by weight of the solution in distilled water is prepared. The solution is stirred gently before phase inversion temperature analysis to ensure that the process occurs in chemical equilibrium. The phase inversion temperature is taken in a thermostable bath by immersing the solutions in 75 mm sealed glass test tube. To ensure the absence of leakage, the test tube is weighed before and after phase inversion temperature measurement. The temperature is gradually increased at a rate of less than 1°C per minute, until the temperature reaches a few degrees below the pre-estimated phase inversion temperature. Phase inversion temperature is determined visually at the first sign of turbidity.

Suitable nonionic surfactants include: i) ethoxylated non-ionic surfactants prepared by the reaction of a monohydroxy alkanol or alkyphenol with 6 to 20 carbon atoms with preferably at least 3 moles particularly preferred at least 5 moles, and still more preferred at least 7 moles of ethylene oxide per mole of alcohol or alkylphenol; ii) alcohol alkoxylated surfactants having from 6 to 20 carbon atoms and at least one ethoxy and propoxy group. Preferred for use herein are mixtures of surfactants i) and ii).

Other suitable non-ionic surfactants are epoxy-capped poly(oxyalkylated) alcohols represented by the formula:

R1O[CH2CH(CH3)O]x[CH2CH2O]y[CH2CH(OH)R2] (I)

wherein R1 is a linear or branched, aliphatic hydrocarbon radical having from 4 to 18 carbon atoms; R2 is a linear or branched aliphatic hydrocarbon radical having from 2 to 26 carbon atoms; x is an integer having an average value of from 0.5 to 1.5, more preferably about 1; and y is an integer having a value of at least 15, more preferably at least 20.

Preferably, the surfactant of formula I, has at least about 10 carbon atoms in the terminal epoxide unit [CH2CH(OH)R2]. Suitable surfactants of formula I, according to the present invention, are Olin Corporation's POLY-TERGENT^{®} SLF-18B nonionic surfactants, as described, for example, in WO 94/22800, published October 13, 1994 by Olin Corporation.

Preferably, the non-ionic surfactant is a surfactant system comprising at least two nonionic surfactants. Preferably at least one of the non-ionic surfactants of the surfactant system is an ethoxylated alcohol which comprises from 5 to 25 moles of ethylene oxide per mole of surfactant, more preferably the surfactant system also comprises an alkoxylated alcohol comprising ethoxy and propoxy groups. Preferably, the weight ratio of the two non-ionic surfactants, i.e. ethoxylated alcohol to alkoxylated alcohol comprising ethoxy and propoxy groups is from 2: 1 to 1:2.

The composition typically comprises from about 0.1 to about 25% by weight of the composition, more preferably from about 0.5 to about 20% by weight of the composition of nonionic surfactant.

### Complexing Agent

Excellent drying and shine benefits are obtained with compositions comprising a dispersant polymer and/or a complexing agent. For the purpose of this invention a "complexing agent" is a compound capable of binding polyvalent ions such as calcium, magnesium, lead, copper, zinc, cadmium, mercury, manganese, iron, aluminium and other cationic polyvalent ions to form a water-soluble complex.

Preferably, the composition comprises an amino-carboxylated complexing agent, preferably selected from the group consisting of methyl-glycine-diacetic acid (MGDA), its salts and derivatives thereof, glutamic-N,N- diacetic acid (GLDA), its salts and derivatives thereof, iminodisuccinic acid (IDS), its salts and derivatives thereof, carboxy methyl inulin, its salts and derivatives thereof, citric acid its salts and derivatives thereof; and mixtures thereof. Especially preferred complexing agent for use herein is selected from the group consisting of MGDA and salts thereof, especially preferred for use herein is the trisodium salt of MGDA. Preferably, the complexing agent is the trisodium salt of MGDA and the dispersant polymer is a sulfonated polymer, more preferably comprising 2-acrylamido-2-methylpropane sulfonic acid monomer. Mixtures of salts of MGDA and salts of citric acid are also preferred for use herein.

The composition of the invention preferably comprises from 10% to 60%, preferably from 20% to 40%, more preferably from 20% to 35% by weight of the composition of a complexing agent.

### Dispersant Polymer

The dispersant polymer, if present, is used in any suitable amount from about 0.1% to about 30%, preferably from 0.25% to about 20%, more preferably from 0.5% to 15% by weight of the composition. Sulfonated/carboxylated polymers are particularly suitable for the composition of the invention.

Suitable sulfonated/carboxylated polymers described herein may have a weight average molecular weight of less than or equal to about 100,000 Da, or less than or equal to about 75,000 Da, or less than or equal to about 50,000 Da, or from about 3,000 Da to about 50,000, preferably from about 5,000 Da to about 45,000 Da.

Preferred sulfonated monomers include one or more of the following: 1-acrylamido-1-propanesulfonic acid, 2-acrylamido-2-propanesulfonic acid, 2-acrylamido-2-methyl-1-propanesulfonic acid, 2-methacrylamido-2-methyl-1-propanesulfonic acid, 3- methacrylamido-2-hydroxy-propanesulfonic acid, allylsulfonic acid, methallylsulfonic acid, allyloxybenzenesulfonic acid, methallyloxybenzenesulfonic acid, 2-hydroxy-3- (2-propenyloxy) propanesulfonic acid, 2-methyl-2-propen-1-sulfonic acid, styrenesulfonic acid, vinylsulfonic acid, 3-sulfopropyl, 3-sulfo-propylmethacrylate, sulfomethacrylamide, sulfomethylmethacrylamide and mixtures of said acids or their water-soluble salts.

Preferably, the polymer comprises the following levels of monomers: from about 40 to about 90%, preferably from about 60 to about 90% by weight of the polymer of one or more carboxylic acid monomer; from about 5 to about 50%, preferably from about 10 to about 40% by weight of the polymer of one or more sulfonic acid monomer; and optionally from about 1% to about 30%, preferably from about 2 to about 20% by weight of the polymer of one or more nonionic monomer. An especially preferred polymer comprises about 70% to about 80% by weight of the polymer of at least one carboxylic acid monomer and from about 20% to about 30% by weight of the polymer of at least one sulfonic acid monomer.

In the polymers, all or some of the carboxylic or sulfonic acid groups can be present in neutralized form, i.e. the acidic hydrogen atom of the carboxylic and/or sulfonic acid group in some or all acid groups can be replaced with metal ions, preferably alkali metal ions and in particular with sodium ions.

The carboxylic acid is preferably (meth)acrylic acid. The sulfonic acid monomer is preferably 2-acrylamido-2-propanesulfonic acid (AMPS).

Preferred commercial available polymers include: Alcosperse 240 and Aquatreat AR 540 supplied by Nouryon; Acumer 3100, Acumer 2000, Acusol 587G and Acusol 588G supplied by Dow. Particularly preferred polymers are Acusol 587G and Acusol 588G supplied by Dow.

Suitable polymers include anionic carboxylic polymer of low molecular weight. They can be homopolymers or copolymers with a weight average molecular weight of less than or equal to about 200,000 g/mol, or less than or equal to about 75,000 g/mol, or less than or equal to about 50,000 g/mol, or from about 3,000 to about 50,000 g/mol, preferably from about 5,000 to about 45,000 g/mol. The dispersant polymer may be a low molecular weight homopolymer of polyacrylate, with an average molecular weight of from 1,000 to 20,000, particularly from 2,000 to 10,000, and particularly preferably from 3,000 to 5,000.

The polymer may be a copolymer of acrylic with methacrylic acid, acrylic and/or methacrylic with maleic acid, and acrylic and/or methacrylic with fumaric acid, with a molecular weight of less than 70,000. Their molecular weight ranges from 2,000 to 80,000 and more preferably from 20,000 to 50,000 and in particular 30,000 to 40,000 g/mol. and a ratio of (meth)acrylate to maleate or fumarate segments of from 30:1 to 1:2.

The polymer may be a copolymer of acrylamide and acrylate having a molecular weight of from 3,000 to 100,000, alternatively from 4,000 to 20,000, and an acrylamide content of less than 50%, alternatively less than 20%, by weight of the dispersant polymer can also be used. Alternatively, such polymer may have a molecular weight of from 4,000 to 20,000 and an acrylamide content of from 0% to 15%, by weight of the polymer.

Polymers suitable herein also include itaconic acid homopolymers and copolymers.

Alternatively, the polymer can be selected from the group consisting of alkoxylated polyalkyleneimines, alkoxylated polycarboxylates, polyethylene glycols, styrene co-polymers, cellulose sulfate esters, carboxylated polysaccharides, amphiphilic graft copolymers and mixtures thereof.

### Bleach

The composition of the invention preferably comprises from about 1 to about 30%, more preferably from about 2 to about 25%, even more preferably from about 5 to about 20% of bleach by weight of the composition.

Inorganic and organic bleaches are suitable for use herein. Inorganic bleaches include perhydrate salts such as perborate, percarbonate, perphosphate, persulfate and persilicate salts. The inorganic perhydrate salts are normally the alkali metal salts. The inorganic perhydrate salt may be included as the crystalline solid without additional protection. Alternatively, the salt can be coated. Suitable coatings include sodium sulphate, sodium carbonate, sodium silicate and mixtures thereof. Said coatings can be applied as a mixture applied to the surface or sequentially in layers.

Alkali metal percarbonates, particularly sodium percarbonate is the preferred bleach for use herein. The percarbonate is most preferably incorporated into the products in a coated form which provides in-product stability.

Potassium peroxymonopersulfate is another inorganic perhydrate salt of utility herein.

Typical organic bleaches are organic peroxyacids, especially dodecanediperoxoic acid, tetradecanediperoxoic acid, and hexadecanediperoxoic acid. Mono- and diperazelaic acid, mono- and diperbrassylic acid are also suitable herein. Diacyl and Tetraacylperoxides, for instance dibenzoyl peroxide and dilauroyl peroxide, are other organic peroxides that can be used in the context of this invention.

Further typical organic bleaches include the peroxyacids, particular examples being the alkylperoxy acids and the arylperoxy acids. Preferred representatives are (a) peroxybenzoic acid and its ring-substituted derivatives, such as alkylperoxybenzoic acids, but also peroxy-α-naphthoic acid and magnesium monoperphthalate, (b) the aliphatic or substituted aliphatic peroxy acids, such as peroxylauric acid, peroxystearic acid, ε-phthalimidoperoxycaproic acid[phthaloiminoperoxyhexanoic acid (PAP)], o-carboxybenzamidoperoxycaproic acid, N-nonenylamidoperadipic acid and N-nonenylamidopersuccinates, and (c) aliphatic and araliphatic peroxydicarboxylic acids, such as 1,12-diperoxycarboxylic acid, 1,9-diperoxyazelaic acid, diperoxysebacic acid, diperoxybrassylic acid, the diperoxyphthalic acids, 2-decyldiperoxybutane-1,4-dioic acid, N,N-terephthaloyldi(6-aminopercaproic acid).

### Bleach Activators

Bleach activators are typically organic peracid precursors that enhance the bleaching action in the course of cleaning at temperatures of 60° C and below. Bleach activators suitable for use herein include compounds which, under perhydrolysis conditions, give aliphatic peroxoycarboxylic acids having preferably from 1 to 12 carbon atoms, in particular from 2 to 10 carbon atoms, and/or optionally substituted perbenzoic acid. Suitable substances bear O-acyl and/or N-acyl groups of the number of carbon atoms specified and/or optionally substituted benzoyl groups. Preference is given to polyacylated alkylenediamines, in particular tetraacetylethylenediamine (TAED), acylated triazine derivatives, in particular 1,5-diacetyl-2,4-dioxohexahydro-1,3,5-triazine (DADHT), acylated glycolurils, in particular tetraacetylglycoluril (TAGU), N-acylimides, in particular N-nonanoylsuccinimide (NOSI), acylated phenol sulfonates, in particular n-nonanoyl- or isononanoyloxybenzenesulfonate (n- or iso-NOBS), decanoyloxybenzoic acid (DOBA), carboxylic anhydrides, in particular phthalic anhydride, acylated polyhydric alcohols, in particular triacetin, ethylene glycol diacetate and 2,5-diacetoxy-2,5-dihydrofuran and also triethylacetyl citrate (TEAC). If present the composition of the invention comprises from 0.01 to 5%, preferably from 0.2 to 2% by weight of the composition of bleach activator, preferably TAED.

### Bleach Catalyst

The composition herein preferably contains a bleach catalyst, preferably a metal containing bleach catalyst. More preferably the metal containing bleach catalyst is a transition metal containing bleach catalyst, especially a manganese or cobalt-containing bleach catalyst.

Bleach catalysts preferred for use herein include manganese triazacyclononane and related complexes; Co, Cu, Mn and Fe bispyridylamine and related complexes; and pentamine acetate cobalt(III) and related complexes.

Preferably the composition of the invention comprises from 0.001 to 0.5%, more preferably from 0.002 to 0.05% of bleach catalyst by weight of the composition. Preferably the bleach catalyst is a manganese bleach catalyst.

### Inorganic builder

The composition preferably comprises an inorganic builder. Suitable inorganic builders are selected from the group consisting of carbonate, silicate and mixtures thereof. Especially preferred for use herein is sodium carbonate. Preferably the composition of the invention comprises from 5 to 50%, more preferably from 10 to 40% and especially from 15 to 30% of sodium carbonate by weight of the composition.

### Enzymes

In describing enzyme variants herein, the following nomenclature is used for ease of reference: Original amino acid(s):position(s):substituted amino acid(s). Standard enzyme IUPAC 1-letter codes for amino acids are used.

### Proteases

Suitable proteases include metalloproteases and serine proteases, including neutral or alkaline microbial serine proteases, such as subtilisins (EC 3.4.21.62) as well as chemically or genetically modified mutants thereof. Suitable proteases include subtilisins (EC 3.4.21.62), including those derived from Bacillus, such as Bacillus lentus, B. alkalophilus, B. subtilis, B. amyloliquefaciens, Bacillus pumilus and Bacillus gibsonii.

Especially preferred proteases for the detergent of the invention are polypeptides demonstrating at least 90%, preferably at least 95%, more preferably at least 98%, even more preferably at least 99% and especially 100% identity with the wild-type enzyme from Bacillus lentus, comprising mutations in one or more, preferably two or more and more preferably three or more of the following positions, using the BPN' numbering system and amino acid abbreviations as illustrated in WO00/37627:V68A, N87S, S99D, S99SD, S99A, S101G, S101M, S103A, V104N/I, G118V, G118R, S128L, P129Q, S130A, Y167A, R170S, A194P, V205I and/or M222S.

Most preferably the protease is selected from the group comprising the below mutations (BPN' numbering system) versus either the PB92 wild-type (SEQ ID NO:2 in WO 08/010925) or the subtilisin 309 wild-type (sequence as per PB92 backbone, except comprising a natural variation of N87S).
(i) G118V + S128L + P129Q + S130A
(ii) S101M + G118V+ S128L + P129Q + S130A
(iii) N76D + N87R + G118R + S128L + P129Q + S130A + S188D + N248R
(iv) N76D + N87R + G118R + S128L + P129Q + S130A + S188D + V244R
(v) N76D + N87R + G118R + S128L + P129Q + S130A
(vi) V68A + N87S + S101G + V104N

Suitable commercially available protease enzymes include those sold under the trade names Savinase^{®}, Polarzyme^{®}, Kannase^{®}, Ovozyme^{®}, Everlase^{®} and Esperase^{®} by Novozymes A/S (Denmark), those sold under the tradename Properase^{®}, Purafect^{®}, Purafect Prime^{®}, Purafect Ox^{®}, FN3^{®}, FN4^{®}, Excellase^{®}, Ultimase^{®} and Purafect OXP^{®} by Genencor International, those sold under the tradename Opticlean^{®} and Optimase^{®} by Solvay Enzymes, those available from Henkel/ Kemira, namely BLAP.

Preferred levels of protease in the product of the invention include from about 0.1 to about 10, more preferably from about 0.5 to about 7 and especially from about 1 to about 6 mg of active protease.

### Amylases

Preferred enzyme for use herein includes alpha-amylases, including those of bacterial or fungal origin. Chemically or genetically modified mutants (variants) are included. A preferred alkaline alpha-amylase is derived from a strain of Bacillus, such as Bacillus licheniformis, Bacillus amyloliquefaciens, Bacillus stearothermophilus, Bacillus subtilis, or other Bacillus sp., such as Bacillus sp. NCIB 12289, NCIB 12512, NCIB 12513, DSM 9375 (USP 7,153,818) DSM 12368, DSMZ no. 12649, KSM AP1378 (WO 97/00324), KSM K36 or KSM K38 (EP 1,022,334). Preferred amylases include:
(a) the variants described in US 5,856,164 and WO99/23211, WO 96/23873, WO00/60060 and WO 06/002643, especially the variants with one or more substitutions in the following positions versus the AA560 enzyme listed as SEQ ID No. 12 in WO 06/002643: 9, 26, 30, 33, 82, 37, 106, 118, 128, 133, 149, 150, 160, 178, 182, 186, 193, 195, 202, 214, 231, 256, 257, 258, 269, 270, 272, 283, 295, 296, 298, 299, 303, 304, 305, 311, 314, 315, 318, 319, 320, 323, 339, 345, 361, 378, 383, 419, 421, 437, 441, 444, 445, 446, 447, 450, 458, 461, 471, 482, 484, preferably that also contain the deletions of D183* and G184*.
(b) variants exhibiting at least 95% identity with the wild-type enzyme from Bacillus sp.707 (SEQ ID NO:7 in US 6,093, 562), especially those comprising one or more of the following mutations M202, M208, S255, R172, and/or M261. Preferably said amylase comprises one of M202L or M202T mutations.

Suitable commercially available alpha-amylases include DURAMYL^{®}, LIQUEZYME^{®}, TERMAMYL^{®}, TERMAMYL ULTRA^{®}, NATALASE^{®}, SUPRAMYL^{®}, STAINZYME^{®}, STAINZYME PLUS^{®}, POWERASE^{®}, FUNGAMYL^{®} and BAN^{®} (Novozymes A/S, Bagsvaerd, Denmark), KEMZYM^{®} AT 9000 Biozym Biotech Trading GmbH Wehlistrasse 27b A-1200 Wien Austria, RAPIDASE^{®} , PURASTAR^{®}, ENZYSIZE^{®}, OPTISIZE HT PLUS^{®} and PURASTAR OXAM^{®} (Genencor International Inc., Palo Alto, California) and KAM^{®} (Kao, 14-10 Nihonbashi Kayabacho, 1-chome, Chuo-ku Tokyo 103-8210, Japan). Amylases especially preferred for use herein include NATALASE^{®}, STAINZYME^{®}, STAINZYME PLUS^{®}, POWERASE^{®} and mixtures thereof.

Preferably, the product of the invention comprises at least 0.01 mg, preferably from about 0.05 to about 10, more preferably from about 0.1 to about 6, especially from about 0.2 to about 5 mg of active amylase.

Preferably, the protease and/or amylase of the composition are in the form of granulates, the granulates comprise less than 29% of sodium sulfate by weight of the granulate or the sodium sulfate and the active enzyme (protease and/or amylase) are in a weight ratio of less than 4:1.

### Alkoxylated polyalkyleneimine

The composition preferably comprises an alkoxylated polyalkyleneimine, more preferably comprises polyethyleneimine and even more preferably it is an ethoxylated polyethyleneimine. Preferably the composition of the invention comprises from 0.1% to about 5%, preferably from about 0.2% to about 3% by weight of the composition of the polyalkyleneimine. Compositions comprising an alkoxylated polyalkyleneimine further contribute to drying and shine, in particular when the aloxylated polyalkyleneimine comprising an alkoxylated polyalkyleneimine said alkoxylated polyalkyleneimine comprising a polyalkyleneimine backbone, alkoxy chains and quaternization groups wherein the alkoxylated polyalkyleneimine has a degree of quaternization of from 40% to 98% and wherein:
i) the polyalkyleneimine backbone represents from 1% to 40% by weight of the alkoxylated polyalkyleneimine;
ii) the alkoxy chains represent from 60% to 99% by weight of the alkoxylated polyalkyleneimine.

The alkoxylation of the polyalkyleneimine backbone comprises one or two alkoxylation modifications in a nitrogen atom, depending on whether the modification occurs at an internal nitrogen atom or at a terminal nitrogen atom in the polyalkyleneimine backbone, the alkoxylation modification involves the replacement of a hydrogen atom in a polyalkyleneimine by a monoalkoxylene or a polyalkoxylene chain preferably having an average of from about 1 to about 50 alkoxy units, wherein the terminal alkoxy unit of the polyalkoxylene chain is capped with hydrogen, C1-C4 alkyl or mixtures thereof. In addition, each nitrogen atom in the alkoxylated polyalkyleneimine may carry saturated or unsaturated, linear or branched alkyl, alkylaryl or aryl substituents, or combinations thereof, preferably benzyl substituents and/or C1-C12, preferably C1-C4 alkyl, aryl or alkylaryl substituents, resulting in neutral or cationic charge on each nitrogen atom depending on its total number of substituents. These modifications may result in permanent quaternization of polyalkyleneimine backbone nitrogen atoms. The degree of permanent quaternization is at least 5%, preferably at least 20%, more preferably from at least from 40% to 100% of the polyalkyleneimine backbone nitrogen atoms.

Preferably, all the nitrogen atoms would comprise alkoxylation modification(s) although it might be possible to have polyalkyleneimines wherein only part of the nitrogen atoms have been alkoxylated.

Examples of possible modifications are herein shown, the modifications correspond to terminal nitrogen atoms in the polyethyleneimine backbone where R represents an ethylene spacer and E represents a C1- C12 alkyl unit and X- represents a suitable water soluble counterion, such as chlorine, bromine or iodine, sulphate (i.e. -O-SO3H or -O-SO3-), alkylsulfonate such as methylsulfonate, arylsulfonate such as tolylsulfonate, and alkyl sulphate, such as methosulphate (i.e. -O-SO2-OMe)).

Examples of possible modifications are shown, the modifications correspond to internal nitrogen atoms in the polyethyleneimine backbone where R represents an ethylene spacer and E represents a C1- C12 alkyl unit and X- represents a suitable water soluble counterion.

Also, for example, but not limited to, below is shown possible modifications to internal nitrogen atoms in the polyethyleneimine backbone where R represents an ethylene spacer and E represents a C1-C12 alkyl unit and X- represents a suitable water soluble counterion.

The alkoxylation modification of the polyalkyleneimine backbone may comprise the replacement of a hydrogen atom by a polyalkoxylene chain having an average of about 1 to about 50 alkoxy units, preferably from about 2 to about 40 alkoxy units, more preferably from about 3 to about 30 units and especially from about 3 to about 20 alkoxy units. The alkoxy units are preferably selected from ethoxy (EO), 1,2-propoxy (1,2-PO), butoxy (BO), and combinations thereof. Preferably, the polyalkoxylene chain is selected from ethoxy units and a combination of ethoxy and propoxy units. More preferably, the polyalkoxylene chain comprises ethoxy units in an average degree of from about 1 to about 50, more preferably from about 2 to about 40 and especially from about 3 to 20. Polyalkyleneimines comprising this degree of ethoxy units have been found to provide best performance in terms of removal of bleachable stains, in particular tea and coffee stains. Also preferred in terms of bleachable stain removal are polyalkoxylene chains comprising a mixture of ethoxy and propoxy chains, preferably the polyalkoxylene chain comprises ethoxy units in an average of from about 1 to about 30 and more preferably propoxy units in an average degree of from about 0 to about 10, more preferably from about 2 to about 20 ethoxy units and from about 1 to about 10 propoxy units.

### Crystal Growth Inhibitor

Crystal growth inhibitors are materials that can bind to calcium carbonate crystals and prevent further growth of species such as aragonite and calcite.

Especially preferred crystal growth inhibitor for use herein is HEDP (1-hydroxyethylidene 1,1-diphosphonic acid). Preferably, the composition comprises from 0.01 to 5%, more preferably from 0.05 to 3% and especially from 0.5 to 2% of a crystal growth inhibitor by weight of the product, preferably HEDP.

### Metal Care Agents

Metal care agents may prevent or reduce the tarnishing, corrosion or oxidation of metals, including aluminium, stainless steel and non-ferrous metals, such as silver and copper. Preferably the composition comprises from 0.1 to 5%, more preferably from 0.2 to 4% and especially from 0.3 to 3% by weight of the product of a metal care agent, preferably the metal care agent is benzo triazole (BTA).

### Glass Care Agents

Glass care agents protect the appearance of glass items during the dishwashing process. Preferably the composition of the invention comprises from 0.1 to 5%, more preferably from 0.2 to 4% and specially from 0.3 to 3% by weight of the composition of a metal care agent, preferably the glass care agent is a zinc containing material, specially hydrozincite.

The automatic dishwashing composition of the invention preferably has a pH as measured in 1% weight/volume aqueous solution in distilled water at 20°C of from about 9 to about 12, more preferably from about 10 to less than about 11.5 and especially from about 10.5 to about 11.5.

The automatic dishwashing composition of the invention preferably has a reserve alkalinity of from about 10 to about 20, more preferably from about 12 to about 18 at a pH of 9.5 as measured in NaOH with 100 grams of product at 20°C.

Preferably, the composition of the invention comprises:
i) from 0.5 to 5% by weight of the composition of the terpolymer;
ii) from 0.5 to 20% by weight of the composition of non-ionic surfactant;
iii) from 5 to 50% by weight of the composition of a complexing agent, preferably the complexing agent comprises a salt of MGDA;
iv) enzymes, preferably an amylase and a protease;
v) optionally from 0.5 to 15% by weight of the composition of a dispersant polymer, preferably a carboxylate/sulfonate polymer;
vi) optionally from 5 to 25% by weight of the composition of bleach and more preferably a bleach catalyst;

Preferably, the composition comprises:
i) from 0.5 to 5% by weight of the composition of the terpolymer;
ii) from 0.5 to 10% by weight of the composition of non-ionic surfactant;
iii) from 5 to 50% by weight of the composition of a builder;
iv) from 5 to 50% by weight of the composition of a complexing agent, preferably the complexing agent comprises a salt of MGDA;
v) enzymes, preferably an amylase and a protease;
vi) from 0.5 to 5% by weight of the composition of a dispersant polymer, preferably a carboxylate/sulfonate polymer;
vii) optionally from 5 to 25% by weight of the composition of bleach and more preferably a bleach catalyst;
viii) a crystal growth inhibitor; and
ix) optionally but preferably an alkoxylated polyalkyleneimine comprising a polyalkyleneimine backbone, alkoxy chains and quaternization groups wherein the alkoxylated polyalkyleneimine has a degree of quaternization of from 40% to 98% and wherein:
   i) the polyalkyleneimine backbone represents from 1% to 40% by weight of the alkoxylated polyalkyleneimine;
   ii) the alkoxy chains represent from 60% to 99% by weight of the alkoxylated polyalkyleneimine.

### Method of Measuring Total Energy Consumption

Typically, the total energy consumption can be determined by using a powermeter plug on the dishwasher. This will measure the energy use of the dishwasher.

### Method of Measuring The Energy Consumption Of The Wash Step

Typically, the energy consumption of the wash step can be determined by using a powermeter plug on the dishwasher. This will measure the energy use of the dishwasher.

### Method of measuring the energy consumption of the rinse step

Typically, the energy consumption of the rinse step can be determined by using a powermeter plug on the dishwasher. This will measure the energy use of the dishwasher.

### EXAMPLES

### I. Preparation of Test Composition

Testing was carried out based on the following cleaning composition: 17.67 grams of an automatic dishwashing detergent comprising MGDA, bleach, bleach catalyst, carbonate, HEDP, sulfonated polymer, protease, amylase and non-ionic surfactant.

### II. Test Items

The following items were sourced and added to each automatic dishwasher. Dishwasher monitors were purchased from Center for Testmaterials B. V. Netherlands. The following stains were used.

| Code | Stain |
|---|---|
| DM71 | Mixed Starch (+colorant) |
| DM25 | Boiled Egg Yolk |
| DM92 | Double Meat |
| DM06 | Baked Cheese |
| DM14 | Dark Tea |

Two real item test stains were prepared; Crème Brulée and Black Tea following the procedures described in the industry recognised German Cosmetic, Toiletry, Perfumery and Detergent Association (IKW) - Working Group for Automatic Dishwashing Detergent's paper: "Recommendations for the Quality Assessment of the Cleaning Performance of Dishwasher Detergents (Part B, Update 2015), Instructions for Preparation - Test Soil Types - Test Procedures".

### III. Additional Ballast Soil I

To add extra soil stress to the test, a blend of soils is added to the dishwasher, as prepared by the procedure described below.

| Ingredient | % content |
|---|---|
| Vegetable oil | 31.6 |
| Margarine | 6.3 |
| Lard | 6.3 |
| Deep-frying fat | 6.3 |
| Whole egg | 15.8 |
| Cream | 9.4 |
| Whole Milk | 6.3 |
| Potato Starch | 2.2 |
| Gravy | 1.7 |
| Wheat Flour | 0.6 |
| Quark Powder | 0.6 |
| Benzoic Acid >99% | 0.3 |
| Tomato Ketchup | 6.3 |
| Mustard | 6.3 |
| Total | 100 |

### IV. Soil Preparation

1. Combine the vegetable oil and whole egg and mix thoroughly (approximately 30 minutes).
2. Add ketchup and mustard, still stirring vigorously.
3. Melt the fats, allow to cool to approximately 40°C, then add to the mixture and blend well.
4. Stir in the cream and milk.
5. Add the powdered solid constituents and mix everything to a smooth paste.
6. Put 50g of the soil mix into plastic pots and freeze.

### V. Test wash procedure

3 different cycles were created leveraging programmable dishwashers Miele G 4203 SC.

| | Method A (according to the invention) | Method B | Method C |
|---|---|---|---|
| Amount of water dosed at the start of the | 4 | 4 | 5 |
| wash step (L) | | | |
| Main Wash Water temperature (°C) | 45 | 48 | 51 |
| Duration of wash step (Min) | 19 | 13 | 18 |
| Duration of temperature range 40-<50 of wash (Min) | 13 | 8 | 5 |
| Amount of water dosed at the start of the rinse step (L) | 4 | 4 | 4.5 |
| Number of Rinse steps | 1 | 2 | 1 |
| Amount of water dosed at the start of the second rinse step (L) | NA | 4 | NA |
| Rinse Water temperature (°C) | 60 | 50 | 41 |
| Duration of the rinse step (min) | 20 | 17 | 3 |
| Duration of temperature 55-65 of rinse (min) | 9 | 0 | 0 |
| Total duration of the cycle (min) | 38 | 30 | 30 |

| | |
|---|---|
| Water hardness: | 21 gpg |
| Cleaning composition addition: | Added into the bottom of the automatic dishwasher when the detergent dispenser opens at the start of the main wash. |
| Additional soil stress: | 1x 50g pot of additional ballast soil added to top rack. |
| Positioning of dishwasher monitors: | Dishwasher monitors were placed on the top rack |
| Positioning of Real Items: | Crème Brulée plates were positioned on the bottom rack and Black Tea cups on the top rack following the IKW procedure. |

### VI. Removal Test

A dishwasher was loaded with the dishwasher monitors and real items as detailed above which were washed using Methods A, B and C respectively. The methods were each repeated four times and an average stain removal performance for each stain wash according to methods A, B and C was calculated.

The cleaning performance of stains washed according to method A was taken as the reference for the below test to calculate the delta SRI values. The stains were analysed using image analysis equipment and software, with results presented below calculated as percentage stain removal, i.e. Stain Removal Index (SRI) for each wash method. Letters denote a statistically significant benefit versus another method using Tukey's HSD multiple comparison procedure in order to control the overall error rate for all pair wise comparisons at 0.05.

Stain Removal Index (SRI) is defined as: 0 = no removal at all, 100 = complete removal.

| | Method A (according to the invention) | Method B | Method C |
|---|---|---|---|
| DM71 | 82.71 BC | 65.15 | 65.07 |
| DM25 | 81.36 | 80.58 | 81.01 |
| DM92 | 93.60 BC | 79.12 | 89.66 |
| DM06 | 84.93 BC | 67.36 | 65.20 |
| DM14 | 82.28 BC | 72.92 C | 64.47 |

The average stain removal performance for each of the real items was determined using the visual grading scale as per the IKW test procedure detailed above using a scale from 1-10 where the higher the value, the better the cleaning performance. Letters denote a statistically significant benefit versus another method using Tukey's HSD multiple comparison procedure in order to control the overall error rate for all pair wise comparisons at 0.05.

| | Method 1 (according to the invention) | Method 2 | Method 3 |
|---|---|---|---|
| Crème Brulée plates | 9.5 BC | 7.6 C | 6.6 |
| Tea cups | 8.9 C | 8.2 | 5.3 |

As can be seen from the results Method 1 according to the invention provides overall superior stain removal performance versus the other Methods tested which fall outside the scope of the claims.

## Claims

1. A method of treating dishware in a domestic automatic dishwashing machine, wherein the method has a total duration of from 30 minutes to 50 minutes, wherein the method comprises a wash step and a rinse step,
wherein at the start of the wash step from 2.0 litres to 5.0 litres of water is dosed into the cleaning chamber of the dishwashing machine and contacts the dishware in the cleaning chamber of the dishwashing machine,
wherein the wash step has a duration of from 15 minutes to 30 minutes, wherein the wash step begins when the water starts to be dosed into the cleaning chamber, and wherein the wash step ends when the wash water starts to be removed from the cleaning chamber, wherein during the wash step, a detergent composition is dosed into the cleaning chamber and contacts the water to form wash water, wherein the wash water contacts the dishware in the cleaning chamber,
wherein the wash step has a temperature profile such that at least 10 minutes of the wash step is carried out a temperature in the range of from 40°C to less than 50°C,
wherein at least most of the wash water is removed from the cleaning chamber at the end of the wash step,
wherein at the start of the rinse step from 2.0 litres to 5.0 litres of additional water is dosed into the cleaning chamber to form rinse water, wherein the rinse water contacts the dishware in the cleaning chamber,
wherein the rinse step has a duration of from 15 minutes to 30 minutes, wherein the rinse step begins when the additional water starts to be dosed into the cleaning chamber, and wherein the rinse step ends when the rinse water starts to be removed from the cleaning chamber,
wherein the rinse step has a temperature profile such that at least 7 minutes of the rinse cycle is carried out a temperature in the range of from 57°C to 63°C,
wherein at least most of the rinse water is removed from the cleaning chamber at the end of the rinse cycle,
and wherein the composition comprises a non-ionic surfactant or a non-ionic surfactant system having a phase inversion temperature, as measured at a concentration of 1% in distilled water, between 20 °C and 70°C.

2. The method according to claim 1, wherein the method does not comprise a pre-wash step.

3. The method according to any preceding claim, wherein the method does not comprise a drying step.

4. The method according to claims 1-2, wherein the method comprises a drying step.

5. The method according to any preceding claim, wherein the method comprises only one single rinse step and does not comprise any additional rinse steps.

6. The method according to any preceding claim, wherein the water dosed into the cleaning chamber at the start of the wash step and/or the additional water dosed into the cleaning chamber at the start of the rinse step is at ambient temperature.

7. The method according to any preceding claim, wherein during the wash step the detergent composition is dosed into the cleaning chamber at a point in time that is between two minutes and five minutes after the start of the wash step.

8. The method according to any preceding claim, wherein during the rinse step a rinse aid composition is dosed into the cleaning chamber and contacts the rinse water to form a rinse solution, and wherein the rinse solution contacts dishware in the dishwashing machine.

9. The method according to any preceding claim, wherein at the start of the wash cycle from 3.0 litres to 4.0 litres of water is dosed into the cleaning chamber, and/or wherein at the start of the rinse cycle from 3.5 litres to 4.0 litres of additional water is dosed into the cleaning chamber.

10. The method according to any preceding claim, wherein the wash step has a temperature profile such that at least 10 minutes of the wash step is carried out a temperature in the range of from 40°C to 48°C.

## Patentansprüche

1. Verfahren zum Behandeln von Geschirr in einem Haushaltsgeschirrspülautomat, wobei das Verfahren eine Gesamtdauer von 30 Minuten bis 50 Minuten aufweist,
wobei das Verfahren einen Waschschritt und einen Spülschritt umfasst,
wobei zu Beginn des Waschschritts von 2,0 Liter bis 5,0 Liter Wasser in die Reinigungskammer der Geschirrspülmaschine dosiert werden und mit dem Geschirr in der Reinigungskammer der Geschirrspülmaschine in Kontakt kommen,
wobei der Waschschritt eine Dauer von 15 Minuten bis 30 Minuten aufweist, wobei der Waschschritt beginnt, wenn mit der Dosierung des Wassers in die Reinigungskammer begonnen wird, und wobei der Waschschritt endet, wenn mit der Entfernung der Waschflotte aus der Reinigungskammer begonnen wird,
wobei während des Waschschritts eine Waschmittelzusammensetzung in die Reinigungskammer dosiert wird und mit dem Wasser in Kontakt kommt, um eine Waschflotte auszubilden, wobei die Waschflotte mit dem Geschirr in der Reinigungskammer in Kontakt kommt,
wobei der Waschschritt ein Temperaturprofil derart aufweist, dass wenigstens 10 Minuten des Waschschritts bei einer Temperatur in dem Bereich von 40 °C bis weniger als 50 °C ausgeführt werden,
wobei an dem Ende des Waschschritts wenigstens der größte Teil der Waschflotte aus der Reinigungskammer entfernt wird,
wobei zu Beginn des Spülschritts von 2,0 Liter bis 5,0 Liter zusätzliches Wasser in die Reinigungskammer dosiert werden, um Spülwasser auszubilden, wobei das Spülwasser mit dem Geschirr in der Reinigungskammer in Kontakt kommt,
wobei der Spülschritt eine Dauer von 15 Minuten bis 30 Minuten aufweist, wobei der Spülschritt beginnt, wenn mit der Dosierung des zusätzlichen Wassers in die Reinigungskammer begonnen wird, und wobei der Spülschritt endet, wenn mit der Entfernung des Spülwassers aus der Reinigungskammer begonnen wird,
wobei der Spülschritt ein Temperaturprofil derart aufweist, dass wenigstens 7 Minuten des Spülzyklus bei einer Temperatur in dem Bereich von 57 °C bis 63 °C ausgeführt werden,
wobei an dem Ende des Spülzyklus wenigstens der größte Teil des Spülwassers aus der Reinigungskammer entfernt wird,
und wobei die Zusammensetzung ein nichtionisches Tensid oder ein nichtionisches Tensidsystem umfasst, das eine Phaseninversionstemperatur, gemessen bei einer Konzentration von 1 % in destilliertem Wasser, zwischen 20 °C und 70 °C aufweist.

2. Verfahren nach Anspruch 1, wobei das Verfahren keinen Vorwaschschritt umfasst.

3. Verfahren nach einem der vorstehenden Ansprüche, wobei das Verfahren keinen Trocknungsschritt umfasst.

4. Verfahren nach den Ansprüchen 1 bis 2, wobei das Verfahren einen Trocknungsschritt umfasst.

5. Verfahren nach einem der vorstehenden Ansprüche, wobei das Verfahren nur einen einzigen Spülschritt umfasst und keine beliebigen zusätzlichen Spülschritte umfasst.

6. Verfahren nach einem der vorstehenden Ansprüche, wobei das zu Beginn des Waschschritts in die Reinigungskammer dosierte Wasser und/oder das zu Beginn des Spülschritts in die Reinigungskammer dosierte zusätzliche Wasser Umgebungstemperatur aufweist.

7. Verfahren nach einem der vorstehenden Ansprüche, wobei während des Waschschritts die Waschmittelzusammensetzung zu einem Zeitpunkt zwischen zwei Minuten und fünf Minuten nach Beginn des Waschschritts in die Reinigungskammer dosiert wird.

8. Verfahren nach einem der vorstehenden Ansprüche, wobei während des Spülschritts eine Spülhilfsmittelzusammensetzung in die Reinigungskammer dosiert wird und mit dem Spülwasser in Kontakt kommt, um eine Spüllösung auszubilden, und wobei die Spüllösung mit dem Geschirr in der Geschirrspülmaschine in Kontakt kommt.

9. Verfahren nach einem der vorstehenden Ansprüche, wobei zu Beginn des Waschzyklus 3,0 Liter bis 4,0 Liter Wasser in die Reinigungskammer dosiert werden und/oder wobei zu Beginn des Spülzyklus 3,5 Liter bis 4,0 Liter zusätzliches Wasser in die Reinigungskammer dosiert werden.

10. Verfahren nach einem der vorstehenden Ansprüche, wobei der Waschschritt ein Temperaturprofil derart aufweist, dass wenigstens 10 Minuten des Waschschritts bei einer Temperatur in dem Bereich von 40 °C bis 48 °C ausgeführt werden.

## Revendications

1. Procédé de traitement de la vaisselle dans un lave-vaisselle automatique domestique, dans lequel la durée totale du procédé est comprise entre 30 et 50 minutes,
dans lequel le procédé comprend une étape de lavage et une étape de rinçage,
dans lequel, au début de l'étape de lavage, de 2,0 litres à 5,0 litres d'eau sont dosés dans la chambre de nettoyage du lave-vaisselle et entrent en contact avec la vaisselle dans la chambre de nettoyage du lave-vaisselle,
dans lequel l'étape de lavage a une durée comprise entre 15 et 30 minutes, dans lequel l'étape de lavage commence lorsque l'eau commence à être dosée dans la chambre de nettoyage, et dans lequel l'étape de lavage se termine lorsque l'eau de lavage commence à être retirée de la chambre de nettoyage,
dans lequel au cours de l'étape de lavage, une composition détergente est dosée dans la chambre de nettoyage et entre en contact avec l'eau pour former de l'eau de lavage, dans lequel l'eau de lavage entre en contact avec la vaisselle dans la chambre de nettoyage,
dans lequel l'étape de lavage a un profil de température tel qu'au moins 10 minutes de l'étape de lavage sont effectuées à une température comprise entre 40 °C et moins de 50 °C,
dans lequel au moins la majeure partie de l'eau de lavage est éliminée de la chambre de nettoyage à la fin de l'étape de lavage,
dans lequel au début de l'étape de rinçage, de 2,0 à 5,0 litres d'eau supplémentaire sont dosés dans la chambre de nettoyage pour former l'eau de rinçage, dans lequel l'eau de rinçage entre en contact avec la vaisselle dans la chambre de nettoyage,
dans lequel l'étape de rinçage a une durée comprise entre 15 et 30 minutes, dans lequel l'étape de rinçage commence lorsque l'eau supplémentaire commence à être dosée dans la chambre de nettoyage, et dans lequel l'étape de rinçage se termine lorsque l'eau de rinçage commence à être retirée de la chambre de nettoyage,
dans lequel l'étape de rinçage a un profil de température tel qu'au moins 7 minutes du cycle de rinçage sont effectuées à une température comprise entre 57 °C et 63 °C,
dans lequel au moins la majeure partie de l'eau de rinçage est éliminée de la chambre de nettoyage à la fin du cycle de rinçage,
et dans lequel la composition comprend un agent de surface non ionique ou un système d'agent de surface non ionique dont la température d'inversion de phase, mesurée à une concentration de 1 % dans de l'eau distillée, est comprise entre 20 °C et 70 °C.

2. Procédé selon la revendication 1, dans lequel le procédé ne comprend pas d'étape de pré-lavage.

3. Procédé selon l'une quelconque des revendications précédentes, dans lequel le procédé ne comprend pas d'étape de séchage.

4. Procédé selon les revendications 1 et 2, dans lequel le procédé comprend une étape de séchage.

5. Procédé selon l'une quelconque des revendications précédentes, dans lequel le procédé ne comprend qu'une seule étape de rinçage et ne comprend pas d'étapes de rinçage supplémentaires.

6. Procédé selon l'une quelconque des revendications précédentes, dans lequel l'eau dosée dans la chambre de nettoyage au début de l'étape de lavage et/ou l'eau supplémentaire dosée dans la chambre de nettoyage au début de l'étape de rinçage est à température ambiante.

7. Procédé selon l'une quelconque des revendications précédentes, dans lequel, au cours de l'étape de lavage, la composition détergente est dosée dans la chambre de nettoyage à un moment situé entre deux minutes et cinq minutes après le début de l'étape de lavage.

8. Procédé selon l'une quelconque des revendications précédentes, dans lequel, au cours de l'étape de rinçage, une composition d'aide au rinçage est dosée dans la chambre de nettoyage et entre en contact avec l'eau de rinçage pour former une solution de rinçage, et dans lequel la solution de rinçage entre en contact avec la vaisselle dans la machine à laver la vaisselle.

9. Procédé selon l'une quelconque des revendications précédentes, dans lequel, au début du cycle de lavage, de 3,0 à 4,0 litres d'eau sont dosés dans la chambre de nettoyage, et/ou dans lequel, au début du cycle de rinçage, de 3,5 à 4,0 litres d'eau supplémentaires sont dosés dans la chambre de nettoyage.

10. Procédé selon l'une quelconque des revendications précédentes, dans lequel l'étape de lavage a un profil de température tel qu'au moins 10 minutes de l'étape de lavage sont effectuées à une température comprise entre 40 °C et 48 °C.
